# EUROPÄISCHE PATENTSCHRIFT

(11) **EP 2 239 825 B1**
(45) Veröffentlichungstag und Bekanntmachung des Hinweises auf die Patenterteilung: **24.02.2016**
(21) Anmeldenummer: 10003107.9
(22) Anmeldetag: 24.03.2010
(51) Int. Cl.: H02J 7/00, H02G 3/14, H02G 3/12

(54) **Elektrisches Installationsgerät mit Ladegerät für ein Mobiltelefon**
Electric installation device with charging device for mobile telephone
Appareil d'installation électrique équipé d'un appareil de charge pour un téléphone mobile

(30) Priorität: 11.04.2009 DE 102009017265
(43) Veröffentlichungstag der Anmeldung: 13.10.2010
(73) Patentinhaber: ABB AG, 68309 Mannheim (DE)
(72) Erfinder: Treude, Hans Jörg, Dipl. -Ing., 58638 Iserlohn (DE)

(56) Entgegenhaltungen:
- EP-A1- 0 961 465
- EP-A1- 0 961 466
- EP-A2- 0 724 347
- JP-A- H06 113 470
- US-A1- 2002 052 138

## Beschreibung

Die Erfindung betrifft ein elektrisches Installationsgerät mit Ladegerät für ein Mobiltelefon.

Zur Aufladung des Akkumulators eines Mobiltelefons ist eine Vielzahl von Ladegeräten bekannt. Um ein Mobiltelefon aufladen zu können, muss man das dazugehörige/passende Ladegerät zur Hand haben, mit dem aufzuladenden Mobiltelefon verbinden und den Stecker des Ladegerätes in eine verfügbare Steckdose einstecken. In unmittelbarer Nähe dieser Steckdose ist dabei oft eine Ablagemöglichkeit für das Mobiltelefon nicht vorhanden. Der Aufbau ist "lose" und "fliegend", d. h. es besteht z. B. das Risiko, dass eine Person über das Netzkabel stolpert oder dass das Netzkabel störend auf der Küchen-Arbeitsplatte liegt und hier den Arbeitsbereich einschränkt.

Aus der EP 0 961 466 A1 und EP 0961 465 A1 sind Ladegeräte für Mobiltelefone bekannt, die für die Wandmontage vorgesehene Unterputzgeräte vorgesehen sind.

Der Erfindung liegt die Aufgabe zugrunde, eine Vorrichtung anzugeben, welche das Aufladen eines Mobiltelefons erleichtert.

Diese Aufgabe wird gelöst durch ein elektrisches Installationsgerät mit Ladegerät für ein Mobiltelefon, mit einem in Form eines Unterputz-Gerätes ausgebildeten und in eine handelsübliche Unterputzdose montierbaren Gerätesockel, welcher ein Ladegerät, insbesondere ein Universalladegerät und einen elektrischen Anschluss für ein Wechselspannungsnetz aufweist, wobei das elektrische Installationsgerät frontseitig eine taschenförmige Abdeckung zum senkrechten Einstecken eines Mobiltelefons aufweist und im Bodenbereich des durch die Abdeckung geschaffenen Innenraums ein Podest mit einer Anschlussschnittstelle für die Kontaktierung der Ladeanschlusssteckbuchse des Mobiltelefons angeordnet ist.

Die mit der Erfindung erzielbaren Vorteile bestehen insbesondere darin, dass ein Universalladegerät respektive eine an einem dem Anwender bekannten Ort fest installierte, platzsparende Ladestation für nahezu alle gängigen Marken und Typen von Mobiltelefonen als Unterputzgerät in einer handelsüblichen Unterputzdose nach DIN 49073 geschaffen wird. Es ergibt sich ein einfacher Anschluss des Mobiltelefons durch Einstecken in die taschenförmige Abdeckung, wodurch zweckmäßig eine federnd gelagerte Klappe selbsttätig in Richtung zum Innenraum der Abdeckung klappt und die Ladeanschlusssteckbuchse des Mobiltelefons die korrespondierende Anschlussschnittstelle kontaktiert. Das Mobiltelefon wird während des Ladevorganges sicher im durch die taschenförmige Abdeckung umschlossenen Innenraum gehalten.

Es entfällt jegliches Suchen des passenden Ladegerätes, die Ladestation befindet sich vielmehr immer am gleichen Ort. Zudem kann auch das Mobiltelefon bei Nichtgebrauch einen festen, bekannten Platz im Universalhalter der Ladestation erhalten (auch ohne dass es aufzuladen ist). Es ist eine formschöne Einbindung/Integration in ein Installationsgeräte-Programm respektive Schalter- und Steckdosenprogramm sowie eine Kombination mit weiteren Geräten, beispielsweise Schaltern/Tastern/Dimmern/Steckdosen, dieses Schalter- und Steckdosenprogramms möglich.

Bei einem Neukauf eines Mobiltelefons wird die vorgeschlagene Ladestation selbstverständlich weiterverwendet. Hierdurch ergibt sich einerseits ein Kostenvorteil, da der Kauf eines neuen Ladegerätes entfällt, andererseits ergibt sich eine Senkung von Industriemüll und damit letztlich eine Senkung des CO2-Ausstosses.

Die Aufgabe der Erfindung wird gelöst durch ein elektrisches Installationsgerät, wie durch den unabhängigen Anspruch 1 definiert.

Zweckmäßige Ausgestaltungen der Erfindung sind in den Unteransprüchen gekennzeichnet.

Die Erfindung wird nachstehend an Hand der in der Zeichnung dargestellten Ausführungsbeispiele näher erläutert. Es zeigen:
- Fig. 1, 2: seitliche Schnitte durch ein elektrisches Installationsgerät mit Ladegerät vor und nach dem Einbringen eines Mobiltelefons in eine taschenförmige Abdeckung,
- Fig. 3: eine perspektivische Ansicht eines elektrischen Installationsgerätes mit Ladegerät,
- Fig. 4: eine perspektivische Ansicht eines elektrischen Installationsgerätes mit eingestecktem Mobiltelefon.

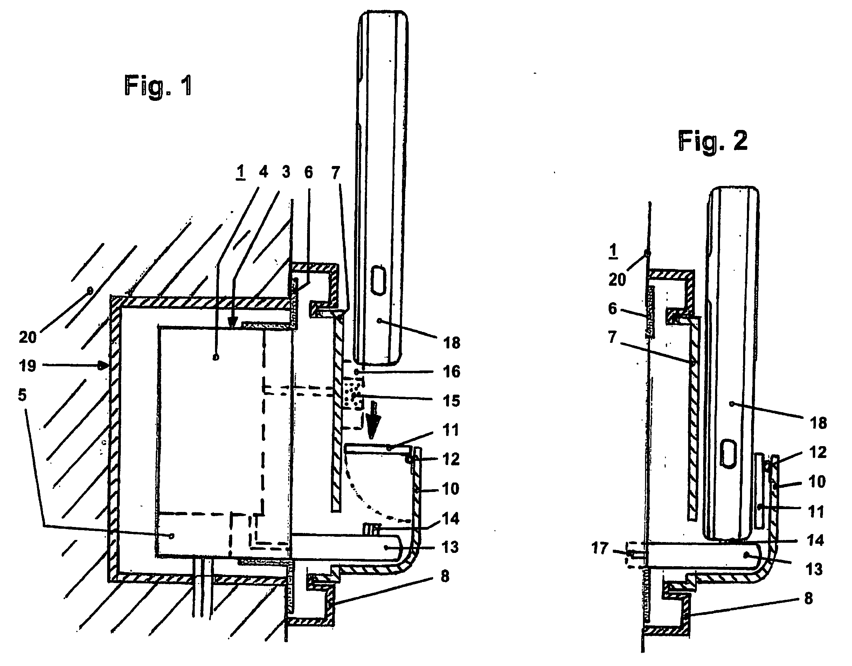

In den Figuren 1 und 2 sind seitliche Schnitte durch ein elektrisches Installationsgerät mit Ladegerät vor und nach dem Einbringen eines Mobiltelefons in eine taschenförmige Abdeckung dargestellt. Das elektrische Installationsgerät 1 ist in Form eines UP-(Unterputz)-Gerätes mit einem Gerätesockel 3 (Unterputzeinsatz) ausgebildet, welcher ein Ladegerät 4 inklusive eines Transformators, insbesondere ein für unterschiedliche Mobiltelefone geeignetes Universalladegerät beinhaltet. Ein elektrischer Anschluss 5 des Gerätesockels 3 stellt die elektrische Verbindung zu einem Wechselspannungsnetz her (Netzanschluss) und dient optional auch als Busanschluss. Der Gerätesockel 3 ist über seinen Tragring 6 und/oder über Federspreizen mechanisch mit einer Unterputzdose 19 verbunden, welche in einer Wand 20 installiert ist.

Das elektrische Installationsgerät 1 wird komplettiert durch eine frontseitig zugängliche Zentralscheibe 7 und einen Abdeckrahmen 8, wobei die Zentralscheibe 7 mit einer taschenförmigen Abdeckung 10 zum senkrechten Einstecken eines Mobiltelefons 18 versehen ist. Der durch die taschenförmige Abdeckung 10 gebildete Anschlussraum ist nach oben mittels einer Klappe 11 verschlossen, welche federnd gelagert ist und ein Scharniergelenk 12 aufweist. Sobald ein Mobiltelefon 18 (Mobilfunkgerät, Handy) mit seiner Stirnfläche gegen die Klappe 11 drückt, federt diese in Richtung Anschlussraum zurück und gibt den Anschlussraum zum Einführen des Mobiltelefons 18 frei, wie dies auch in Fig. 2 gezeigt ist. Gegebenenfalls können die nach außen weisenden Flächen der Klappe 11 mit Polsterungen oder Gummierungen versehen sein, um derart einen Schutz für das Mobiltelefon zu schaffen. Durch die Verwendung der Klappe 11 bleibt der durch die taschenförmige Abdeckung 10 gebildete Innenraum staubfrei, zudem ist das Installationsgerät 1 leicht zu reinigen. Ferner ist das mittels Klappe 11 gebildete Design gefälliger als eine Ausführungsform mit dauerhaft offenem Anschlussraum.

Wesentliche Baukomponente des elektrischen Installationsgerätes 1 ist ein mit dem Gerätesockel 3 verbundenes und aus diesem herausragendes und von der taschenförmigen Abdeckung 10 umschlossenes Podest 13, welches eine elektrisch mit dem Ladegerät 4 verbundene Anschlussschnittstelle 14 - beispielsweise eine Micro-USB-Standard-Schnittstelle - zum Kontaktieren der Ladeanschlusssteckbuchse des Mobiltelefons 18 besitzt. Fig. 2 zeigt die Position mit Kontaktierung von Anschlussschnittstelle 14 / Ladeanschlussbuchse des Mobiltelefons 18, bei welcher eine Aufladung des Akkumulators des Mobiltelefons 18 über das Ladegerät 4 erfolgt.

Die taschenförmige Abdeckung 10 stellt gleichzeitig auch einen Universalhalter / Universalaufnahme / Parkstation / Ablagemöglichkeit für ein Mobiltelefon 18 dar, d. h. es ist auch möglich, das Mobiltelefon 18 in die taschenförmige Abdeckung 10 einzulegen, ohne dass dabei eine Kontaktierung zwischen Ladeanschlusssteckbuchse des Mobiltelefons und Anschlussschnittstelle 14 erfolgt.

Zur Komplettierung des elektrischen Installationsgerätes 1 können optional vorgesehen sein:
- eine optische Anzeige 15 (vorzugsweise mindestens eine LED) zur Signalisierung des Ladevorganges (rote LED kennzeichnet den Ladestatus, grüne LED signalisiert einen geladenen Mobiltelefon-Akkumulator),
- eine akustische Anzeige zur Signalisierung des Ladevorgang-Endes,
- ein Ein/Aus-Schalter 16 zum Einschalten/Abschalten des Ladegeräts 4.

Bei einer einfacheren Ausführungsform ohne Ein/Aus-Schalter 16 wird der Aufladevorgang des Akkumulators des Mobiltelefons 18 automatisch durch Kontaktierung zwischen der Ladeanschlusssteckbuchse des Mobiltelefons und der Anschlussschnittstelle 14 gestartet.

In Weiterführung der Erfindung kann die Anschlussschnittstelle 14 durch entsprechende austauschbare Adapterstücke derart umgestaltet werden, dass Mobiltelefon-Gerätetypen verschiedener Hersteller an ein und demselben Installationsgerät 1 angeschlossen und aufgeladen werden können. Für eine derartige Ausgestaltung können z. B. austauschbare Podeste 13 mit jeweils unterschiedlichen Anschlussschnittstellen 14 zur Verfügung gestellt werden, wobei die Podeste 13 über elektrische Kontakte für die elektrische Verbindung mit einer im Gerätesockel 3 angeordneten und mit dem Ladegerät 4 verbundenen Sockelschnittstelle 17 verfügen, wie dies in Fig. 2 gezeigt ist.

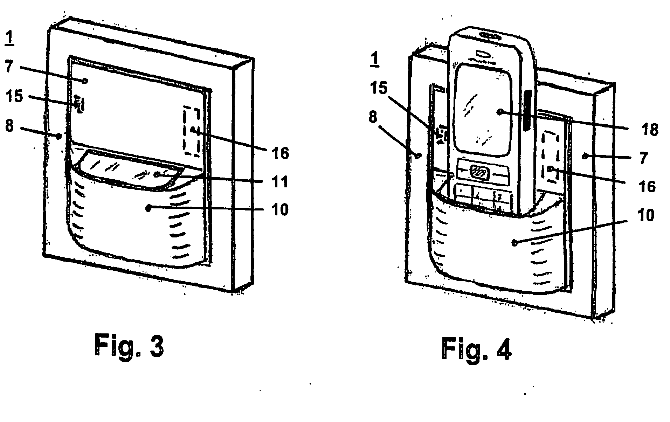

In Fig. 3 ist eine perspektivische Ansicht eines elektrischen Installationsgerätes mit Ladegerät dargestellt. Es ist die Zentralscheibe 7 mit taschenförmiger Abdeckung 10, federnd gelagerter Klappe 11 sowie optionaler optischer Anzeige 15 und optionalem Ein/Aus-Schalter 16 zu erkennen. Die Zentralscheibe 7 wird vom Abdeckrahmen 8 in bekannter Art und Weise umschlossen. Selbstverständlich ist es auch möglich, Zentralscheibe 7 und Abdeckrahmen 8 des Installationsgerätes 1 in einem einstückigen Bauteil zu integrieren.

In Fig. 4 ist eine perspektivische Ansicht eines elektrischen Installationsgerätes 1 mit eingestecktem Mobiltelefon dargestellt. Wie zu erkennen ist, wird das in die taschenförmige Abdeckung 10 eingesteckte Mobiltelefon 18 in einer relativ wenig störenden aufrechten Position gehalten, wobei rechts und links des Mobiltelefons 18 genügend Fläche auf der Zentralscheibe 7 verbleibt, um die optionale optische Anzeige 15 und den optionalen Ein/Aus-Schalter 16 zu integrieren.

Durch Einschalten des Ein/Aus-Schalters 16 wird bei eingestecktem Mobiltelefon 18 der Aufladevorgang des Akkumulators des Mobiltelefons 18 gestartet. Zweckmäßig signalisiert die optische Anzeige 15 in Form einer roten LED den Aufladevorgang. Sobald der Ladevorgang beendet ist, wird dies durch eine optische Anzeige 15 in Form einer grünen LED und gegebenenfalls zusätzlich auch durch eine kurzzeitig aktivierte akustische Anzeige signalisiert, d. h. die Ladeanschlusssteckbuchse des Mobiltelefons 18 wird nunmehr aus der Anschlussschnittstelle 14 des elektrischen Installationsgerätes 1 gezogen, indem das Mobiltelefon 18 aus der taschenartigen Abdeckung 10 entnommen wird. Die optische Anzeige 15 verlischt, der Ein/AusSchalter 16 wird abgeschaltet und die federnd gelagerte Klappe 11 schwenkt selbsttätig in die den Innenraum abschließende Position zurück.

Optional kann auch eine optische Anzeige in Form eines Displays realisiert sein, welches sämtliche Informationen zum Ladevorgang und/oder Status des Mobiltelefons anzeigt. Darüber hinaus sind auch eingehende SMS, Anrufe, Mails usw. des angeschlossenen Mobiltelefons 18 mittels des Displays anzeigbar. Die Kommunikation zwischen dem elektrischen Installationsgerät 1 und dem Display erfolgt zweckmäßig über den erwähnten elektrischen Anschluss (Busanschluss).

Die Montage des Installationsgerätes 1 oder 2 erfolgt zweckmäßig in "Griffhöhe", z. B. in Kabelkanälen oder im Küchenbereich (oberhalb der Arbeitsplatte).

### Bezugszeichenliste

- 1: elektrisches Installationsgerät in Form eines UP-Gerätes
- 2: ---
- 3: Gerätesockel (Unterputzeinsatz)
- 4: Ladegerät inklusive Transformator, insbesondere Universalladegerät
- 5: elektrischer Anschluss (Netzanschluss, ggf. Busanschluss)
- 6: Tragring
- 7: Zentralscheibe
- 8: Abdeckrahmen
- 9: ---
- 10: taschenförmige Abdeckung zum senkrechten Einstecken eines Mobiltelefons
- 11: federnd gelagerte Klappe zum Verschluss des Anschlussraumes
- 12: Scharniergelenk
- 13: Podest
- 14: Anschlussschnittstelle für Mobiltelefon
- 15: optische Anzeige zur Signalisierung des Ladevorgangs
- 16: Ein/Aus-Schalter
- 17: Sockelschnittstelle
- 18: Mobiltelefon (Mobilfunkgerät, Handy,) inklusive Akkumulator und Ladeanschlusssteckbuchse
- 19: Unterputzdose
- 20: Wand

## Patentansprüche

1. Elektrisches Installationsgerät mit Ladegerät für ein Mobiltelefon, mit einem in Form eines Unterputz-Gerätes ausgebildeten und in eine handelsübliche Unterputzdose (19) montierbaren Gerätesockel (3), welcher ein Ladegerät (4), insbesondere ein Universalladegerät und einen elektrischen Anschluss (5) für ein Wechselspannungsnetz aufweist, wobei das elektrische Installationsgerät (1) frontseitig eine taschenförmige Abdeckung (10) zum senkrechten Einstecken eines Mobiltelefons (18) aufweist und im Bodenbereich des durch die Abdeckung (10) geschaffenen Innenraums ein Podest (13) mit einer Anschlussschnittstelle (14) für die Kontaktierung der Ladeanschlusssteckbuchse des Mobiltelefons (18) angeordnet ist, **dadurch gekennzeichnet, dass** der durch die taschenförmige Abdeckung (10) gebildete Anschlussraum nach oben mittels einer Klappe (11) verschlossen ist, welche federnd gelagert ist und ein Scharniergelenk (12) aufweist.

2. Installationsgerät nach Anspruch 1, **dadurch gekennzeichnet, dass** die taschenförmige Abdeckung (10) als Teil einer Zentralscheibe (7) ausgebildet ist, welche von einem Abdeckrahmen (8) umschlossen ist.

3. Installationsgerät nach Anspruch 2, **dadurch gekennzeichnet, dass** Zentralscheibe (7) und Abdeckrahmen (8) in einem einstückigen Bauteil integriert sind.

4. Installationsgerät nach Anspruch 1, **dadurch gekennzeichnet, dass** die Anschlussschnittsstelle (14) in Form einer Micro-USB-Standard-Schnittstelle ausgebildet ist.

5. Installationsgerät nach einem der vorstehenden Ansprüche, **dadurch gekennzeichnet, dass** eine optische Anzeige (15) zur Signalisierung des Ladevorgangs vorgesehen ist.

6. Installationsgerät nach einem der vorstehenden Ansprüche, **dadurch gekennzeichnet, dass** eine akustische Anzeige zur Signalisierung des Ladevorgang-Endes vorgesehen ist.

7. Installationsgerät nach einem der vorstehenden Ansprüche, **dadurch gekennzeichnet, dass** ein Ein/Aus-Schalter (16) zum Einschalten/Abschalten des Ladegeräts (4) vorgesehen ist.

8. Installationsgerät nach einem der vorstehenden Ansprüche, **dadurch gekennzeichnet, dass** die Anschlussschnittstelle (14) durch entsprechende austauschbare Adapterstücke umgestaltbar ist, dass Mobiltelefon-Gerätetypen verschiedener Hersteller an ein und demselben Installationsgerät (1) angeschlossen und aufgeladen werden können.

9. Installationsgerät nach Anspruch 8, **dadurch gekennzeichnet, dass** austauschbare Podeste (13) mit jeweils unterschiedlichen Anschlussschnittstellen (14) zur Verfügung gestellt werden, wobei die Podeste (13) über elektrische Kontakte für die elektrische Verbindung mit einer im Gerätesockel (3) angeordneten und mit dem Ladegerät (4) verbundenen Sockelschnittstelle (17) verfügen.

## Claims

1. An electrical installation device with charger for a cellphone, with a device socket (3) that is shaped like a flush-mounted device and that can be mounted in a commercially available flush-mounted socket (19), with a charger (4), particularly a universal charger, that has an electrical connection (5) for an AC power supply network, wherein the electrical installation device (1) has a pocket-shaped cover (10) on the front side for inserting a cellphone (18) vertically, and has a pedestal (13) in the base area of the inside created by the cover (10), with a connection port (14) for making contact with the charger connection socket of the cellphone (18), **characterized in that** the connection space formed by the pocket-shaped cover (10) is sealed on the top with the help of a flap (11), which is spring-supported and has a hinged joint (12).

2. Installation device according to claim 1, **characterized in that** the pocket-shaped cover (10) is formed as a central disk (7), which is surrounded by a cover frame (8).

3. Installation device according to claim 2, **characterized in that** the central disk (7) and cover frame (8) are integrated into a one-piece component.

4. Installation device according to claim 1, **characterized in that** the connection port (14) is formed like a standard micro USB port.

5. Installation device according to one of the previous claims, **characterized in that** a visual display (15) is provided to the indicate the charging operation.

6. Installation device according to one of the previous claims, **characterized in that** an acoustic signal to indicate the end of the charging operation is provided.

7. Installation device according to one of the previous claims, **characterized in that** an On / Off switch (16) is provided to switch the charger (4) on and off.

8. Installation device according to one of the previous claims, **characterized in that** the connection port (14) can be converted with the help of replaceable adapter pieces, so that cellphone device types of different manufacturers can be connected to one and the same installation device (1) and charged.

9. Installations device according to claim 8, **characterized in that** replaceable pedestals (13) with different connection ports (14) are provided wherein the pedestals (13) have electrical contacts for electrical connection with a socket port (17) placed in the device socket (3) and connected with the charger (4).

## Revendications

1. Appareil d'installation électrique avec chargeur pour téléphones mobiles, avec un socle de l'appareil (3) conçu dans la forme d'un appareil encastré et pouvant être monté dans une boîte d'encastrement (19) courante, comprenant un chargeur (4), en particulier un chargeur universel, et un raccordement électrique (5) pour un réseau à tension alternative, l'appareil d'installation électrique (1) comprenant sur la partie frontale une couverture (10) en forme de poche pour l'insertion verticale d'un téléphone mobile (18) et ayant une plate-forme (13) avec une interface de raccordement (14) pour la mise en contact de la fiche du port de chargement du téléphone mobile (18) installée sur la zone de fond de l'espace interne créé par la couverture (10), **caractérisé en ce que** l'espace de raccordement formé par la couverture (10) en forme de poche est fermé vers le haut au moyen d'un clapet (11) qui est monté de manière élastique et comprend une articulation à charnière (12).

2. Appareil d'installation selon la revendication 1, **caractérisé en ce que** la couverture (10) en forme de poche est conçue comme une partie d'une plaque centrale (7), laquelle est entourée par un cadre de recouvrement (8).

3. Appareil d'installation selon la revendication 2, **caractérisé en ce que** la plaque centrale (7) et le cadre de recouvrement (8) sont intégrés dans un composant monobloc.

4. Appareil d'installation selon la revendication 1, **caractérisé en ce que** l'interface de raccordement (14) est conçue sous la forme d'une interface micro USB standard.

5. Appareil d'installation selon l'une des revendications précédentes, **caractérisé en ce qu'**un affichage optique (15) pour la signalisation du processus de chargement est prévu.

6. Appareil d'installation selon l'une des revendications précédentes, **caractérisé en ce qu'**une indication acoustique pour la signalisation du processus de chargement est prévue.

7. Appareil d'installation selon l'une des revendications précédentes, **caractérisé en ce qu'**un interrupteur marche/arrêt (16) pour la mise en marche/l'arrêt du chargeur (4) est prévu.

8. Appareil d'installation selon l'une des revendications précédentes, **caractérisé en ce que** l'interface de raccordement (14) est modifiable au moyen de pièces d'adaptation remplaçables, de sorte que des types d téléphones mobiles de différents fabricants puissent être raccordés et rechargés sur un seul et même appareil d'installation (1)

9. Appareil d'installation selon la revendication 8, **caractérisé en ce que** des plates-formes (13) interchangeables avec des interfaces de raccordement (14) respectives différentes sont mises à disposition, les plates-formes (13) disposant de contacts électriques pour la connexion électrique avec une interface de connexion (17) située dans le socle de l'appareil (3) et raccordée au chargeur (4).
